Europäisches Patentamt

European Patent Office

Office européen des brevets

(11) Numéro de publication: **0 216 976**
**A1**

## (12) DEMANDE DE BREVET EUROPEEN

(21) Numéro de dépôt: 85440055.3

(22) Date de dépôt: 20.09.85

(51) Int. Cl.⁴ **F01C 9/00 , F04B 35/00**

Revendications modifiées conformément à la règle 86 (2) CBE.

(43) Date de publication de la demande:
**08.04.87 Bulletin 87/15**

(84) Etats contractants désignés:
**DE GB IT NL SE**

(71) Demandeur: **Canot, Albert**
**Le Void de Girancourt**
**F-88390 Darnieulles(FR)**

(72) Inventeur: **Canot, Albert**
**Le Void de Girancourt**
**F-88390 Darnieulles(FR)**

(54) **Dispositif moteur et/ou compresseur autopropulseur.**

(57) La présente invention concerne un dispositif moteur et/ou compresseur autopropulseur.

Dispositif caractérisé en ce qu'il est autopropulseur par utilisation de l'action de la pression, de la déflagration, ou de la détonation, et par neutralisation de la réaction anti-propulsive, ou moyen de pistons droits ou toriques, moteurs (1) et/ou compresseurs - (5, 6) et d'organes de synchronisation des mouvements desdits pistons.

Fig.1

## Dispositif moteur et/ou compresseur autopropulseur

La présente invention concerne le domaine de la propulsion de véhicules terrrestres, marins, ou aériens, et a pour objet un dispositif moteur et/ou compresseur autopropulseur.

Actuellement, les dispositifs de propulsion existants sont généralement du type à transmission d'un mouvement au moyen de roues ou d'hélices, ou encore du type à rejet de gaz brûlés en sens contraire de la direction de propulsion. Ces dispositifs connus permettent l'obtention de résultats acceptables, mais ne sont, à l'exception des moteurs-fusées, pas adaptés à une propulsion dans le vide. En effet, seuls les moteurs-fusées sont en mesure de s'appuyer, dans des conditions de vide, sur l'inertie d'une masse, qui est l'inertie de leur propre masse, du fait du rejet des gaz à leur partie arrière.

Cependant, ce mode de propulsion est très vorace en énergie sous forme de mélange carburant-comburant du fait de difficultés de compression préalable, et le fonctionnement de tels moteurs-fusées est très limité dans le temps en raison des capacités d'emport de carburant et de comburant.

La présente invention a pour but de pallier ces inconvénients.

Elle a, en effet, pour objet un dispositif moteur et/ou compresseur, caractérisé en ce qu'il est autopropulseur par utilisation de l'action de la pression, de la déflagration, ou de la détonation, et par neutralisation de la réaction anti-propulsive, au moyen de pistons droits ou toriques, moteurs et/ou compresseurs et d'organes de synchronisation des mouvements desdits pistons.

L'invention sera mieux comprise grâce à la description ci-après, qui se rapporte à des modes de réalisation préférés, donnés à titre d'exemples non limitatifs, et expliqués avec référence aux dessins schématiques annexés, dans lesquels :

la figure 1 est une vue en coupe d'un dispositif moteur-compresseur conforme à l'invention ;

la figure 2 est une vue analogue à la figure 1 d'une variante de réalisation de l'invention ;

la figure 3 est une vue en coupe d'un dispositif compresseur ;

la figure 4 représente, en coupe, une variante de réalisation de la figure 2 ;

la figure 5 montre, en coupe, une variante de réalisation de la figure 4 ;

la figure 6 est une vue en coupe d'un dispositif moteur à quatre pistons toriques ;

la figure 7 représente une variante de réalisation de la figure 6 ;

la figure 8 représente une autre variante de réalisation de l'invention ;

la figure 9 montre une variante de réalisation de la figure 8 ;

la figure 10 représente une variante de réalisation de la figure 5 ;

la figure 11 montre un autre mode de réalisation du dispositif suivant la figure 1 ;

les figures 12 et 13 représentent des variantes de réalisation de la figure 1, et

la figure 14 est une vue en coupe d'une autre variante de réalisation de l'invention.

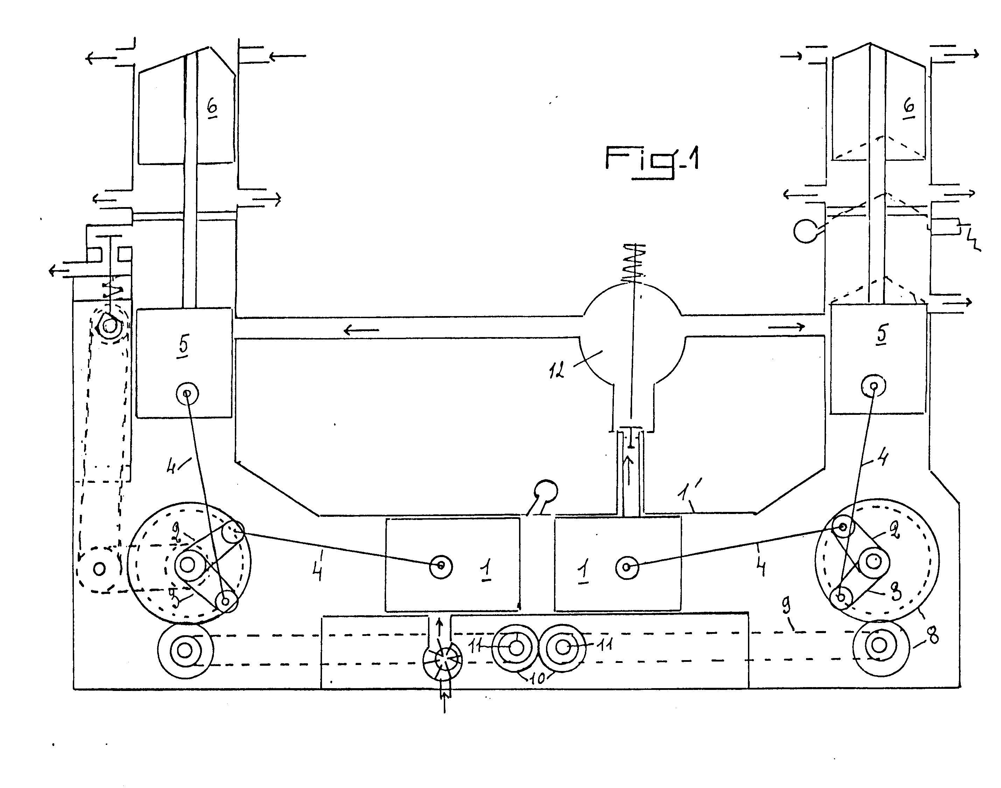

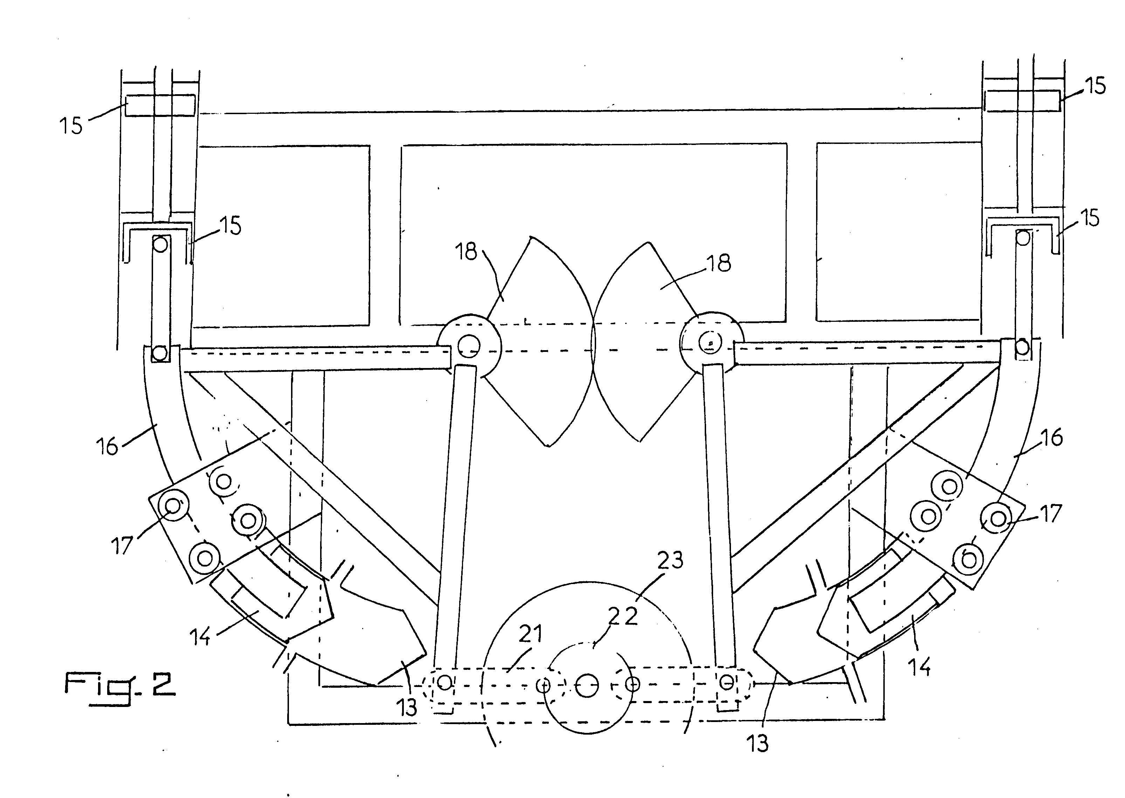

Conformément à l'invention, et comme le montrent, à titre d'exemple, les figures 1 et 2 des dessins annexés, le dispositif moteur et/ou compresseur est caractérisé en ce qu'il est autopropulseur par utilisation de l'action de la pression, de la déflagration, ou de la détonation, et par neutralisation de la réaction anti-propulsive, au moyen de pistons droits ou toriques, moteurs 1, 14 et/ou compresseurs 5, 6, 15 et d'organes de synchronisation des mouvements desdits pistons.

La figure 1 représente un dispositif moteur-compresseur autopropulseur comportant, d'une part, deux pistons moteurs droits 1 disposés dans un cylindre commun 1' et actionnant chacun, au moyen d'un ensemble vilebrequins 2, 3 et d'une bielle 4 au moins un piston compresseur droit 5, ou plusieurs pistons compresseurs 5, 6 alignés entre eux dans une chambre de compression, et, d'autre part, des organes de synchronisation des mouvements des pistons sous forme d'engrenages 8 reliés à des engrenages inverseurs 10 au moyen de chaines 9 et chacun à une roue dentée solidaire de l'axe des vilbrequins 2, 3, ou d'engrenages coniques et d'arbres, la sortie d'échappement du cylindre moteur commun 1' étant reliée à un réservoir intermédiaire 12 alimentant les chambres de compression, et les axes 11 des engrenages inverseurs 10 formant des arbres moteurs.

Un tel dispositif peut fournir un mouvement rotatif utilisable et être autopropulseur. Le moteur est avantageusement doté d'une avance à l'injection ou à l'allumage comprise entre 40° et 50°, de préférence de 45°, de manière à obtenir un passage difficile aux points morts qui a pour effet d'augmenter le point d'appui sur les pistons compresseurs.

Les pistons 5, 6 travaillent en compresseurs ou encore en moteurs deux temps et toutes les chambres des cylindres sont munies, de manière connue, de décompresseurs pour faciliter la mise en route du dispositif. En outre, les pistons 1 peuvent également fonctionner à la vapeur, par utilisation d'un dispositif de distribution supplémentaire.

Lorsque les pistons 5 et 6 travaillent en compresseurs, ils sont, soit alimentés en air, soit alimentés en gaz brûlés, issus du cylindre moteur 1', par l'intermédiaire du réservoir 12. Dans ce dernier cas, une deuxième compression de ces gaz permet leur épuration par augmentation de leur chaleur et donc réduction des imbrûlés et transformation de l'oxyde de carbone en gaz carbonique.

A cet effet, les culasses des chambres de compression et les dessus des pistons 5, 6 sont revêtus de platine, de palladium, ou de rhodium formant catalyseur, les culasses étant, en outre, avantageusement munies de bouchons d'accès pour le nettoyage et, éventuellement, d'une bougie d'allumage ou d'un dispositif de combustion complémentaire.

Les organes mobiles sont graissés de manière usuelle sous carter ou sous pression.

La figure 2 représente une variante de réalisation de l'invention, dans laquelle le dispositif consiste en deux cylindres moteurs 13 toriques dans lesquels sont montés des pistons toriques 14 reliés à des pistons compresseurs droits 15, uniques ou multiples, au moyen de tiges coudées 16 guidées par des rouleaux 17, ou analogues, les pistons 14 étant accouplés et synchronisés au moyen de portions de roues dentées 18 engrenant entre elles et reliées chacune, d'une part, au moyen d'un levier 19 à la tige coudée 16 correspondante, et, d'autre part, au moyen d'une bielle 20 et d'une biellette 21 à un vilebrequin 22 solidaire d'un volant 23. Ainsi, l'axe de support des volants 23 peut former simultanément l'axe moteur et la pression engendrée dans les chambres de compression des pistons compresseurs 15, par compression d'un gaz incombustible, transmet au véhicule équipé du dispositif une énergie propulsive de direction opposée avec annulation des forces de réaction des pistons moteurs 14. En effet, la compression et l'explosion créent des forces de réaction sur les culasses des cylindres correspondants, qui ont pour effet de rejeter les pistons. Du fait de leur liaison mécanique, ces pistons entraînent les pistons 15 dans le sens d'une compression annulant la force de réaction et créant une réaction propulsive perpendiculaire aux réactions.

Conformément à une caractéristique de l'invention, les pistons moteurs 1, 14 s'étendent perpendiculairement aux pistons compresseurs 5, 6, 15. Ce mode de réalisation permet l'obtention d'une transformation des réactions motrices, de sens opposé, qui ont tendance à s'annuler en une action propulsive latérale.

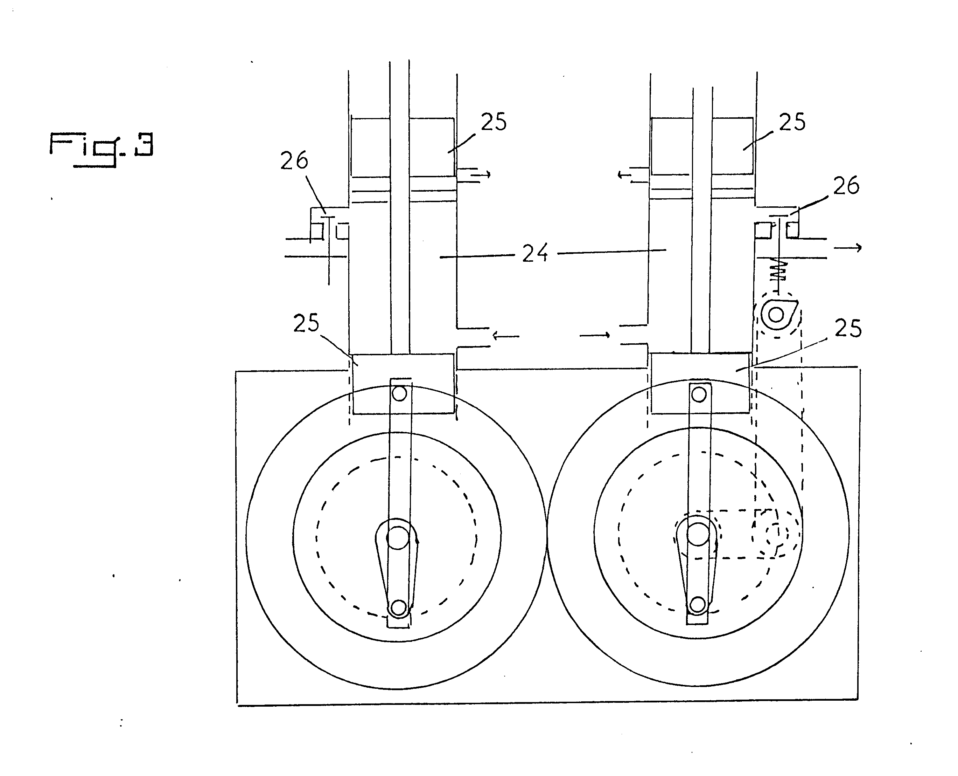

La figure 3 représente une autre variante de réalisation de l'invention, dans laquelle le dispositif est un dispositif autopropulseur uniquement compresseur constitué par des cylindres parallèles 24 dans lesquels sont guidés des pistons uniques ou multiples 25 entraînés par l'intermédiaire d'embiellages connus éventuellement reliés entre eux par des engrenages, au moyen d'un ou de plusieurs moteurs électriques alimentés par des cellules photovoltaïques, ou par une autre énergie solaire ou atomique, et par des soupapes commandées 26 commiquant avec la partie supérieure des cylindres 24, ces soupapes 26 étant commandées à l'ouverture au point mort haut. Ce mode de réalisation permet d'éviter que le gaz comprimé ne crée une force contraire à la propulsion.

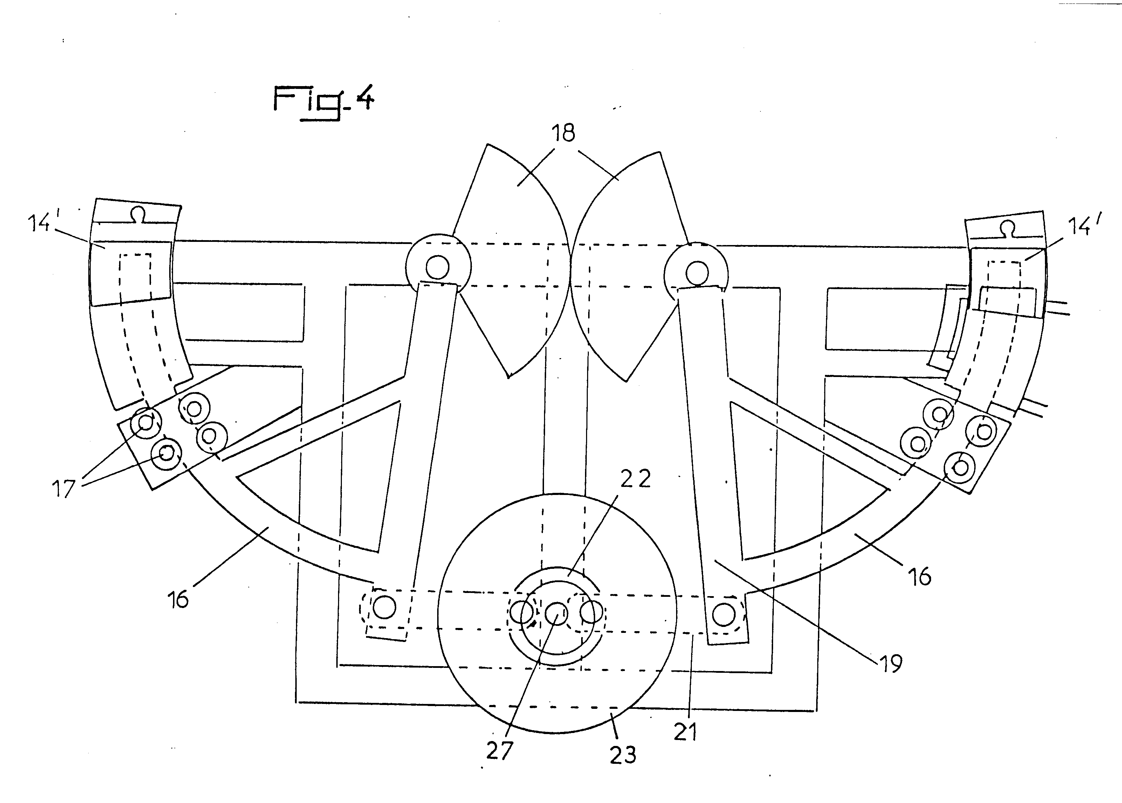

La figure 4 représente une autre variante de réalisation de l'invention, dans laquelle le dispositif est uniquement moteur et est constitué par un ensemble moteur analogue à celui de la figure 2. Un tel moteur est capable de fournir un mouvement rotatif sur les axes 27 des volants 23 reliés aux portions de roues dentées 18 solidarisées avec les tiges coudées 16 reliées aux pistons toriques 14', ainsi qu'une énergie propulsive sous forme de forces parallèles agissant sur les culasses du moteur.

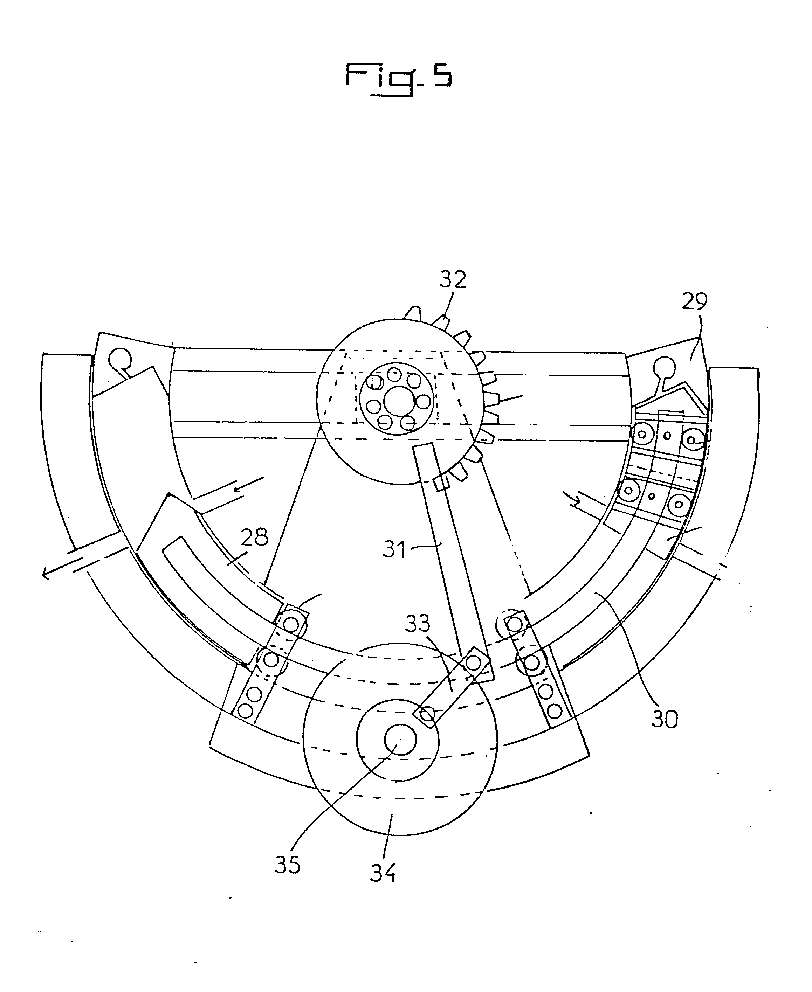

Selon une variante de réalisation de l'invention, et comme le montre la figure 5, le dispositif est uniquement moteur et est constitué par des pistons toriques 28 guidés en mouvement alternatif dans des chambres 29 et reliés entre eux par une tige torique 30 qui est reliée à un balancier 31 muni d'un secteur denté 32 du côté de son palier et relié par l'intermédiaire d'une biellette 33 à un embiellage 34 d'un arbre moteur 35, le secteur 32 permettant l'accouplement avec un dispositif identique en vue de la propulsion.

Conformément à une autre caractéristique de l'invention, les pistons toriques ainsi que les pistons droits, moteurs ou compresseurs, peuvent avantageusement être munis de galets, de billes, ou d'aiguilles de guidage périphériques et sont réalisés en plusieurs parties assemblées entre elles, de sorte que le frottement aux parois est diminué et que le phénomène d'ovalisation est évité.

Les tiges coudées 16 et la tige torique 30 peuvent présenter une section quelconque, carrée, rectangulaire, circulaire, ovale, ou autre.

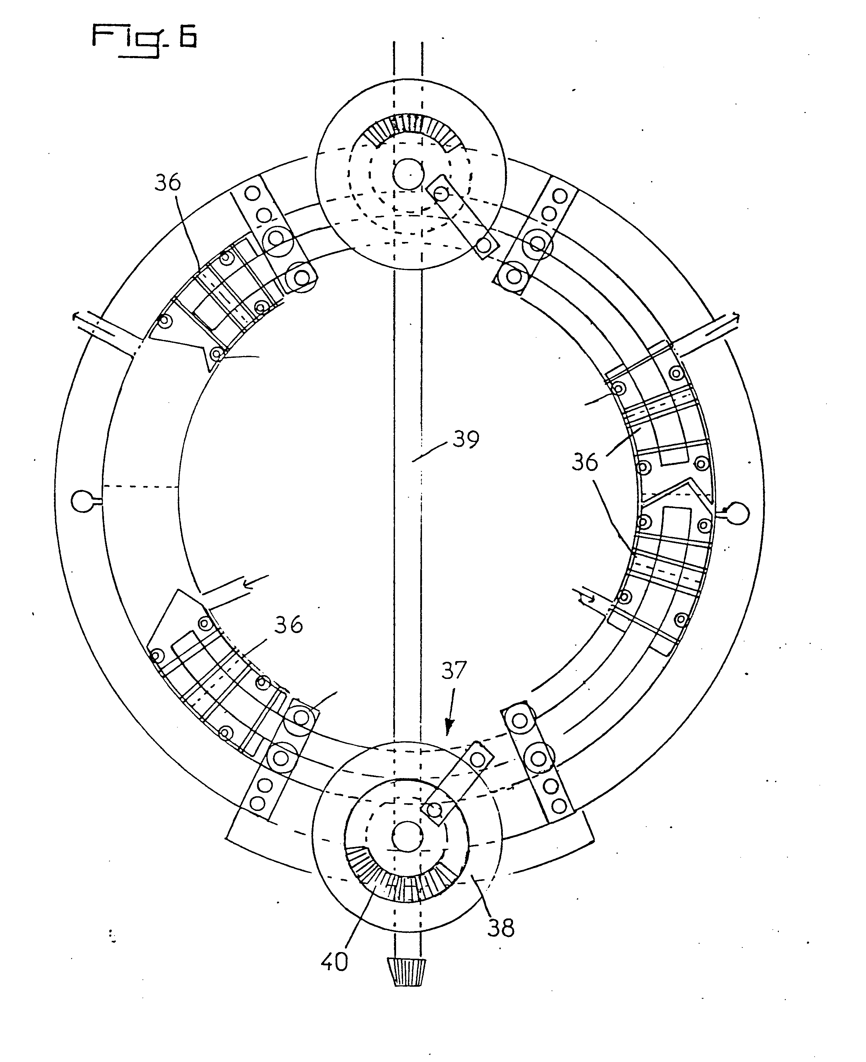

La figure 6 représente un dispositif moteur à quatre pistons toriques 36 opposés et reliés par paires au moyen de bielles toriques permettant un mouvement rotatif par l'intermédiaire de deux embiellages 37 entraînant chacun un volant 38 et un arbre moteur 39 au moyen d'engrenages coniques 40. Dans un tel moteur, du fait de la forme torique des cylindres et des pistons ainsi que des bielles, aucune énergie n'est perdue aux point morts, l'énergie étant emmagasinée par le volant 38, qui n'assure pas la compression et le changement de sens des pistons, de sorte qu'une économie d'énergie, et donc un meilleur rendement, sont obtenus.

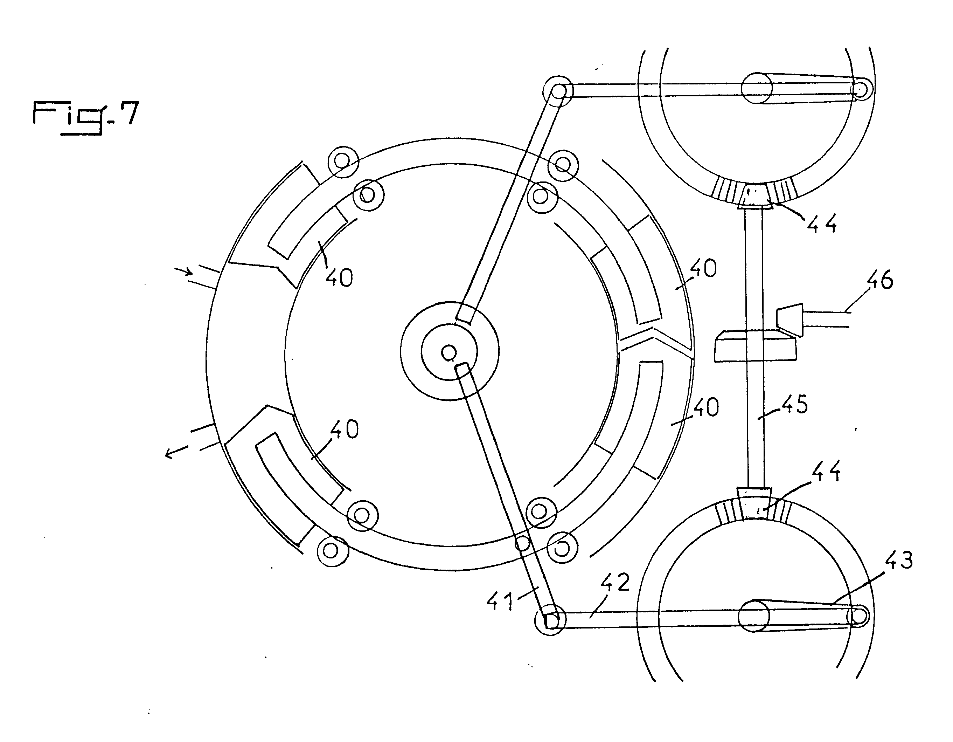

La figure 7 représente une variante de réalisation du dispositif suivant la figure 6, dans laquelle les pistons toriques 36 actionnent, au moyen de leur bielle torique, des balanciers 41 entraînant des bielles 42 agissant sur des vilebrequins 43 qui entraînent, par l'intermédiaire d'engrenages coniques 44, un axe commun 45 d'actionnement d'un arbre moteur 46.

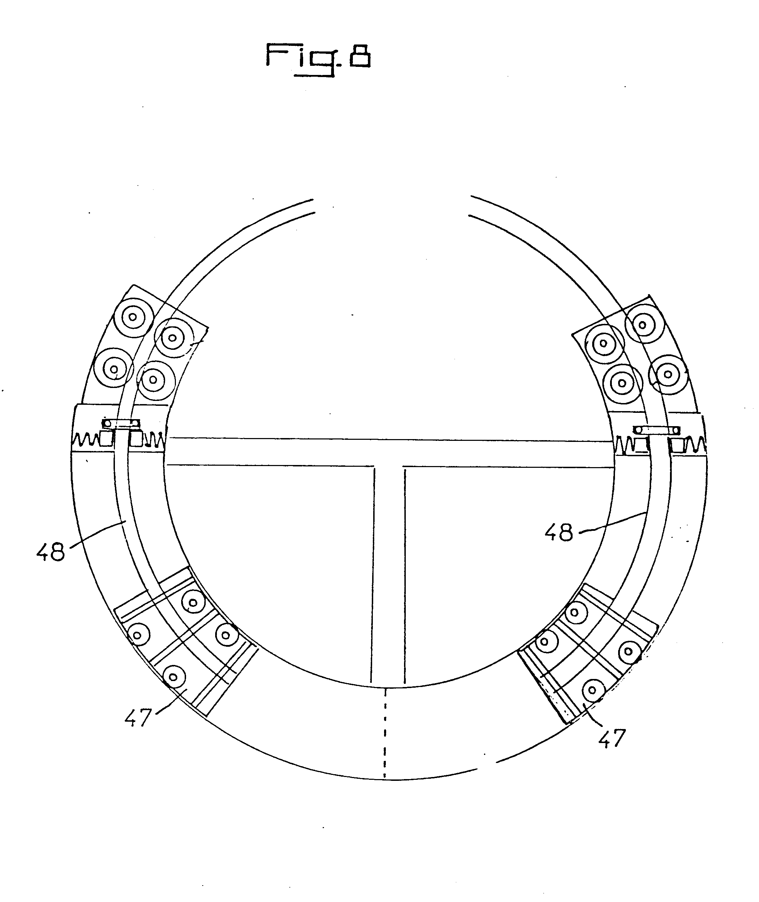

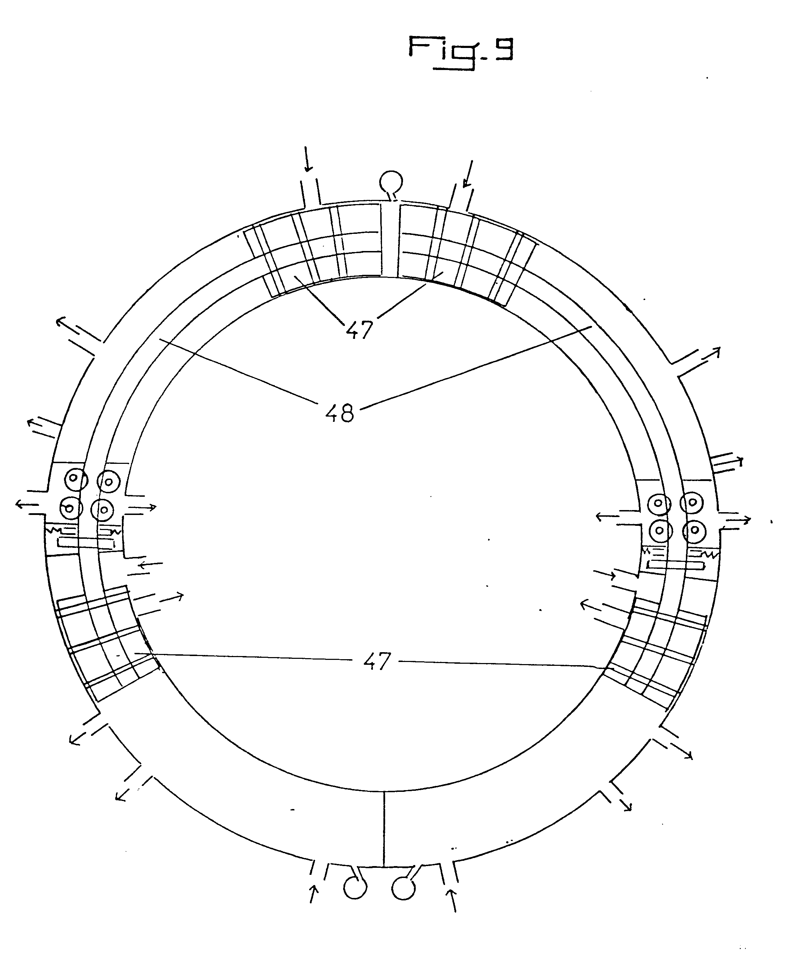

Conformément à une autre variante de réalisation de l'invention, et comme le montrent les figures 8 et 9, le dispositif est muni d'au moins une paire de pistons moteurs toriques libres 47 montés chacun à l'extrémité d'une bielle torique de guidage 48, dont la face opposée à la bielle travaille en moteur dans une chambre de combustion, et dont la face solidaire de la bielle 48 travaille en compresseur, la chambre de compression étant alimentée en air frais ou en gaz brûlés issus de la chambre de combustion, les pressions dans les chambres étant contrôlées et gérées par un microprocesseur au moyen de détecteurs et de soupapes à commande pneumatique, hydraulique, ou électromagnétique. Dans le cas du dispositif suivant la figure 9, ce dernier est constitué par deux paires de pistons 47 reliés entre eux, et une faible explosion sera produite entre deux pistons opposés, qui aura pour effet de propulser les deux autres pistons l'un vers l'autre dans le sens d'une compression du mélange carburé suivi d'une forte explosion. Ces deux pistons réalisent alors, pendant leur course de retour, une forte compression propulsive avec leur autre face, une pousée centrifuge supplémentaire étant obtenue grâce à l'inertie des deux autres pistons.

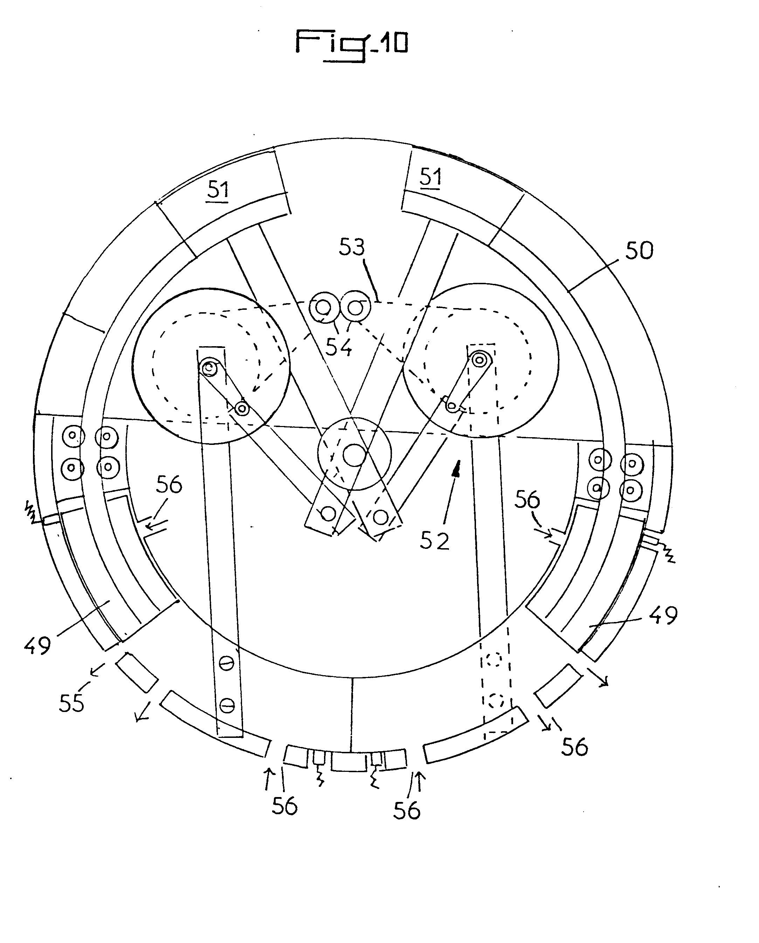

La figure 10 représente une autre variante de réalisation de l'invention, dans laquelle le dispositif est un moteur à pistons toriques à double effet explosif sur les deux faces de ses pistons 49 qui sont reliés chacun par une bielle torique 50, d'une part, à une masse 51 d'un poids égal ou supérieur à celui du piston 49, et, d'autre part, à un embiellage 52, les embiellages 52 étant synchronisés au moyen de chaînes 53 et d'engrenages inverseurs 54, les chambres de combustion étant munies, en outre, de soupapes 55, 56 commandées à l'aide de cames, de poussoirs, ou analogues.

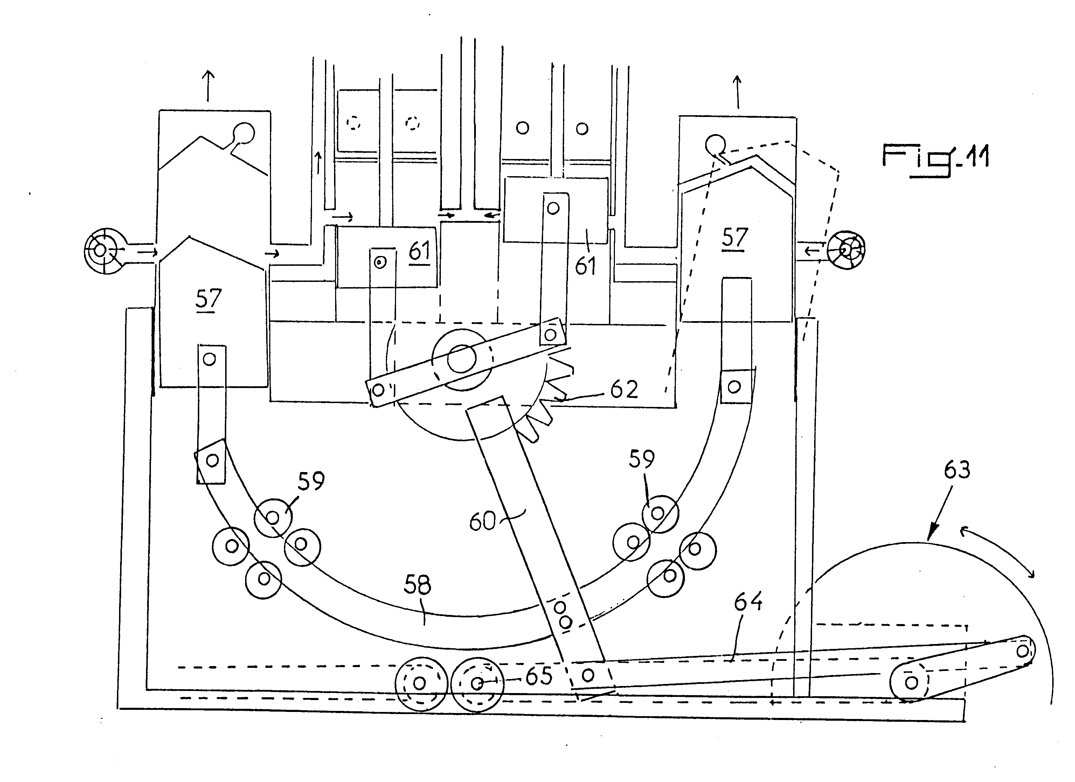

Le dispositif selon l'invention peut également être constitué, comme le montre la figure 11, par au moins deux ensembles moteurs-compresseurs à pistons moteurs 57 parallèles reliés entre eux par une bielle courbe 58 guidée par des rouleaux 59 et actionnant, au moyen d'un levier 60, une roue 62 à secteur denté ainsi que deux pistons de compression 61 simples ou multiples dont les chambres de compression peuvent être alimentées par les gaz brûlés dans les chambres de combustion des pistons 57, les ensembles moteurs-compresseurs étant reliés entre eux au moyen des roues 62 à secteur denté ou au moyen d'ensembles embiellage 63 -chaîne 64 -arbre moteur 65, ou d'engrenages coniques. Afin d'éviter une usure des pistons 57, ces derniers peuvent être disposés légèrement obliquement par rapport aux pistons 61.

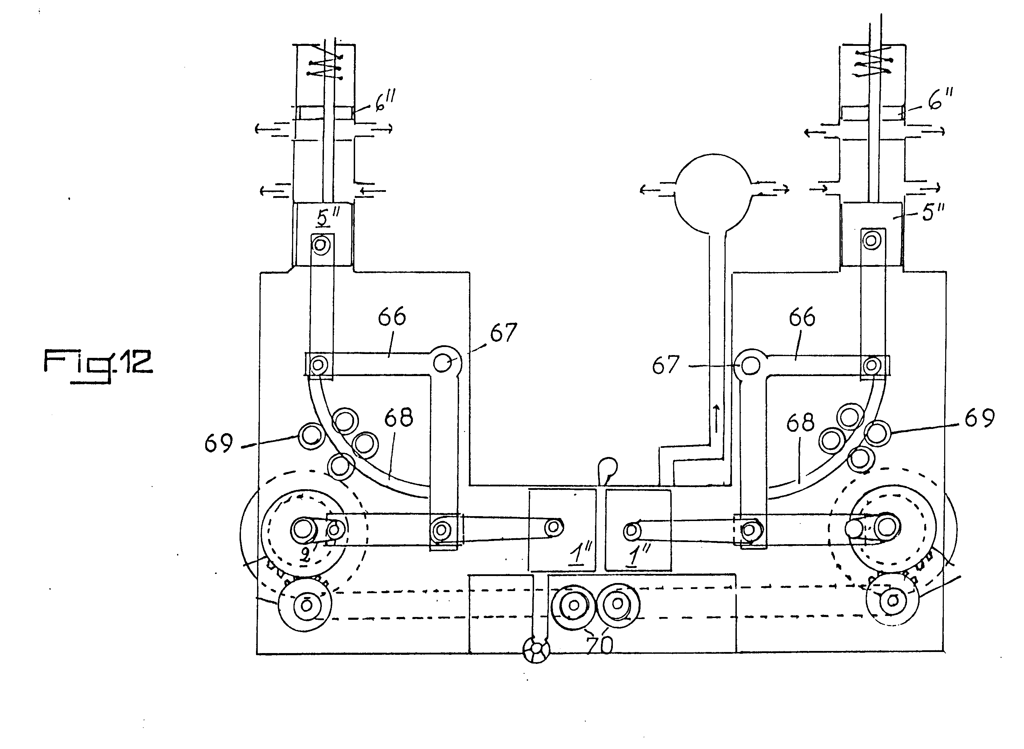

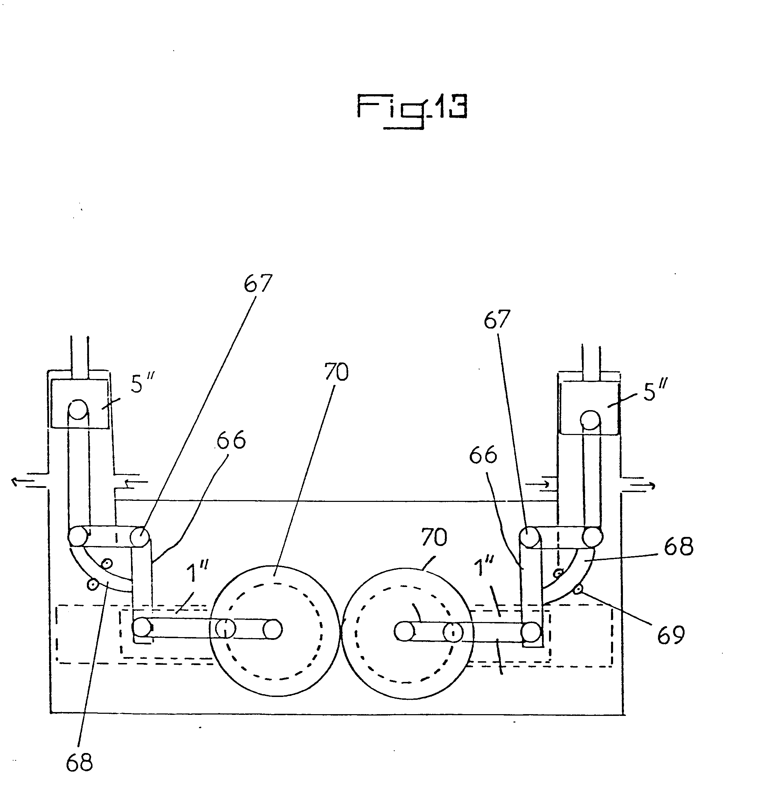

Conformément à une autre variante de réalisation de l'invention, les pistons moteurs 1" peuvent être opposés dans une même chambre de combustion (figure 12) ou être montés dans deux chambres différentes (figure 13) et sont reliés aux pistons compresseurs 5", 6" au moyen d'une équerre 66, dont l'angle 67 est monté à pivotement, et dont les bras sont rigidifiés au moyen d'une tige torique 68 guidée à coulissement par des roulettes 69, ou analogues, les chambres de compression étant munies de soupapes de décharge commandées (non représentées), et les pistons étant synchronisés au moyen d'engrenages 70.

La disposition selon la figure 13 permet d'amener simultanément les pistons 1" au point mort haut quand les pistons 5", 6" sont au point mort bas.

Les moteurs selon les figures 12 et 13 peuvent également être munis de ressorts d'amortissement des forces de réactions des pistons moteurs, et permettent une transmission classique du mouvement à des roues ou hélices ainsi qu'une autopropulsion.

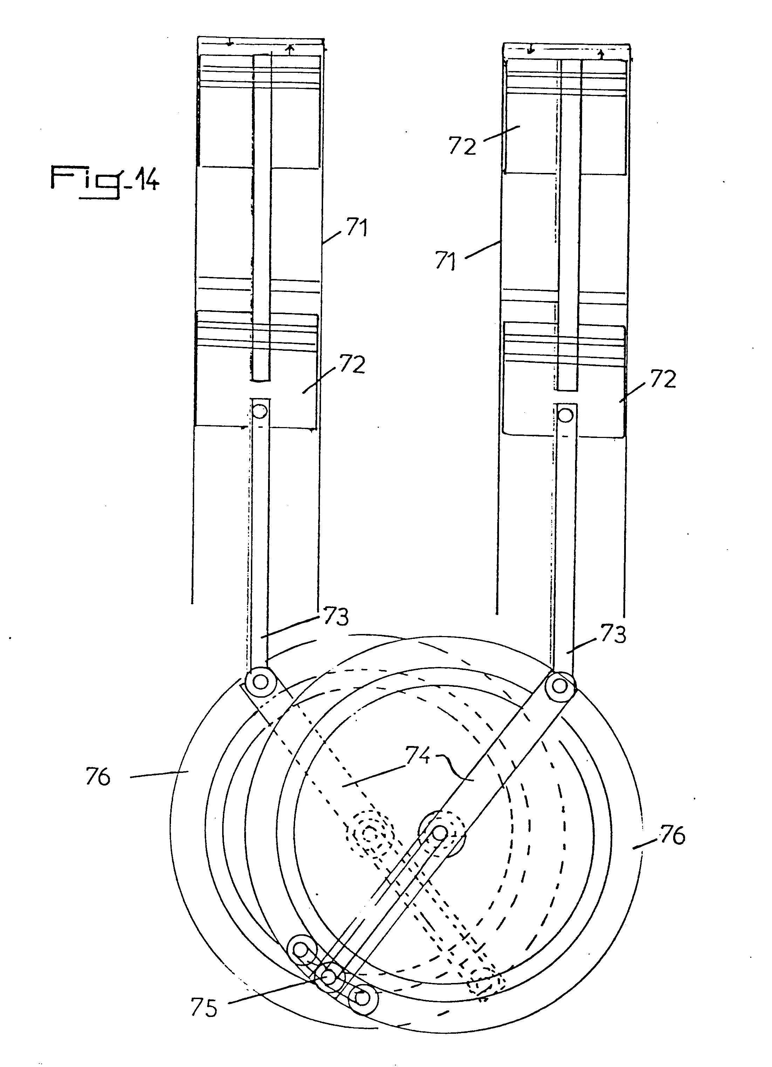

La figure 14 représente un autre mode de réalisation de l'invention, dans lequel le dispositif est un compresseur autopropulseur constitué par des cylindres parallèles 71 dans lesquels sont guidés des pistons compresseurs 72 simples ou multiples, qui sont actionnés chacun par un ensemble bielle 73 -manivelle 74 tournant en sens contriaire de l'autre, dont la manivelle 74 est montée, avec possibilité de verrouillage intermittent au moyen d'un frein 75 commandé automatiquement par un programmateur ou un microprocesseur, sur un disque d'entraînement 76. Ainsi, par serrage des freins 75 , les pistons 72 sont entraînés dans le sens d'une compression des gaz dans les cylindres 71, les freins libérant lesdits pistons avant la fin de la compression, de sorte qu'ils sont rejetés vers leur point mort bas en produisant une réaction propulsive.

L'invention a également pour objet une machine d'usinage des cylindres toriques caractérisée en ce qu'elle est munie d'un outil à tranchants multiples entraîné en rotation par un flexible guidé dans un tube torique ou par un moteur présentant un carter torique, le tube ou le moteur étant monté sur un bras pivotant, et par un polissoir extensible monté également sur un tube torique solidaire d'un bras pivotant.

Les dispositifs conformes à l'invention peuvent être montés sur des pivots, de sorte que les directions de propulsion peuvent être variées en fonction des besoins.

Ces dispositifs peuvent animer des pièces alternatives et peuvent être munis pour leur stabilisation de dispositifs à effet gyroscopique, ces dispositifs pouvant tout simplement être constitués par des réservoirs compressibles animés d'un mouvement de rotation et compartimentés.

Grâce à l'invention, il est possible d'utiliser la force centrifuge pour la propulsion de sorte que les rendements des moteurs sont augmentés et que leur consommation d'énergie est diminuée.

Bien entendu, l'invention n'est pas limitée aux modes de réalisation décrits et représentés aux dessins annexés. Des modifications restent possibles, notamment du point de vue de la constitution des divers éléments, ou par substitution d'équivalents techniques, sans sortir pour autant du domaine de protection de l'invention.

**Revendications**

1. Dispositif moteur et/ou compresseur caractérisé en ce qu'il est autopropulseur par utilisation de l'action de la pression, de la déflagration, ou de la détonation, et par neutralisation de la réaction anti-propulsive, au moyen de pistons droits ou toriques, moteurs (1, 14) et/ou compresseurs (5, 6, 15) et d'organes de synchronisation des mouvements desdits pistons.

2. Dispositif, suivant la revendication 1, caractérisé en ce qu'un dispositif moteur-compresseur autopropulseur comporte, d'une part, deux pistons moteurs droits (1) disposés dans un cylindre commun (1') et actionnant chacun, au moyen d'un ensemble vilebrequins (2, 3) et d'une bielle (4), au moins un piston compresseur droit (5), ou plusieurs pistons compresseurs (5, 6) alignés entre eux dans une chambre de compression, et, d'autre part, des organes de synchronisation des mouvements des pistons sous forme d'engrenages (8) reliés à des engrenages inverseurs (10) au moyen de chaînes (9) et chacun à une roue dentée solidaire de l'axe des vilebrequins (2, 3), ou d'engrenages coniques et d'arbres, en ce que la sortie d'échappement du cylindre moteur commun (1') est reliée à un réservoir intermédiaire (12) alimentant les chambres de compression, et en ce que les axes (11) des engrenages inverseurs (10) forment des arbres moteurs.

3. Dispositif, suivant l'une quelconque des revendications 1 et 2, caractérisé en ce que le moteur est avantageusement doté d'une avance à l'injection ou à l'allumage comprise entre 40° et 50°, de préférence de 45°.

4. Dispositif, suivant l'une quelconque des revendications 1 à 3, caractérisé en ce que les culasses des chambres de compression et les dessus des pistons (5, 6) sont revêtus de platine, de palladium, ou de rhodium formant catalyseur, les culasses étant, en outre, avantageusement munies de bouchons d'accès pour le nettoyage et, éventuellement, d'une bougie d'allumage ou d'un dispositif de combustion complémentaire.

5. Dispositif, suivant la revendication 1, caractérisé en ce qu'il consiste en deux cylindres moteurs (13) toriques dans lesquels sont montés des pistons toriques (14) reliés à des pistons compresseurs droits (15), uniques ou multiples, au moyen de tiges coudées (16) guidées par des rouleaux (17), ou analogues, les pistons (14) étant accouplés et synchronisés au moyen de portions de roues dentées (18) engrenant entre elles et reliées chacune, d'une part, au moyen d'un levier (19) à la tige coudée (16) correspondante, et, d'autre part, au moyen d'une bielle (20) et d'une biellette (21) à un vilebrequin (22) solidaire d'un volant (23).

6. Dispositif, suivant l'une quelconque des revendications 1 à 5, caractérisé en ce que les pistons moteurs (1, 14) s'étendent perpendiculairement aux pistons compresseurs (5, 6, 15).

7. Dispositif, suivant la revendication 1, caractérisé en ce qu'il est un dispositif autopropulseur uniquement compresseur constitué par des cylindres parallèles (24), dans lesquels sont guidés des pistons uniques ou multiples (25) entraînés par l'intermédiaire d'embiellages connus éventuellement reliés entre eux par des engrenages, au moyen d'un ou de plusieurs moteurs électriques alimentés par des cellules photovoltaïques, ou par une autre énergie solaire ou atomique, et par des soupapes commandées (26) communiquant avec la partie supérieure des cylindres (24), ces soupapes (26) étant commandées à l'ouverture au point mort haut.

8. Dispositif, suivant la revendication 1, caractérisé en ce qu'il est uniquement moteur et est constitué par des pistons toriques (28) guidés en mouvement alternatif dans des chambres (29) et reliés entre eux par une tige torique (30) qui est reliée à un balancier (31) muni d'un secteur denté (32) du côté de son palier et relié par l'intermédiaire d'une biellette (33) à un embiellage (34) d'un arbre moteur (35), le secteur (32) permettant l'accouplement avec un dispositif identique en vue de la propulsion.

9. Dispositif, suivant l'une quelconque des revendications 1 à 8, caractérisé en ce que les pistons toriques ainsi que les pistons droits, moteurs ou compresseurs, sont avantageusement munis de galets, de billes, ou d'aiguilles de guidage périphériques et sont réalisés en plusieurs parties assemblées entre elles.

10. Dispositif, suivant l'une quelconque des revendications 1 à 9, caractérisé en ce qu'il est un dispositif moteur à quatre pistons toriques (36) opposés et reliés par paires au moyen de bielles toriques permettant un mouvement rotatif par l'intermédiaire de deux embiellages (37) entraînant chacun un volant (38) et un arbre moteur (39) au moyen d'engrenages coniques (40).

11. Dispositif, suivant la revendication 10, caractérisé en ce que les pistons toriques (36) actionnent, au moyen de leur bielle torique, des balanciers (41) entraînant des bielles (42) agissant sur des vilebrequins (43) qui entraînent, par l'intermédiaire d'engrenages coniques (44), un axe commun (45) d'actionnement d'un arbre moteur - (46).

12. Dispositif, suivant la revendication 1, caractérisé en ce qu'il est muni d'au moins une paire de pistons moteurs toriques libres (47) montés chacun à l'extrémité d'une bielle torique de guidage (48), dont la face opposée à la bielle travaille en moteur dans une chambre de combustion, et dont la face solidaire de la bielle (48) travaille en compresseur, la chambre de compression étant alimentée en air frais ou en gaz brûlés issus de la chambre de combustion, les pressions dans les chambres étant contrôlées et gérées par un microprocesseur au moyen de détecteurs et de soupapes à commande pneumatique, hydraulique, ou électromagnétique.

13. Dispositif, suivant la revendication 1, caractérisé en ce qu'il est un moteur à pistons toriques à double effet explosif sur les deux faces de ses pistons (49), qui sont reliés chacun par une bielle torique (50), d'une part, à une masse (51) d'un poids égal ou supérieur à celui du piston (49), et, d'autre part, à un embiellage (52), les embiellages (52) étant synchronisés au moyen de chaînes - (53) et d'engrenages inverseurs (54), les chambres de combustion étant munies, en outre, de soupapes (55, 56) commandées à l'aide de cames, de poussoirs, ou analogues.

14. Dispositif, suivant la revendication 1, caractérisé en ce qu'il est constitué par au moins deux ensembles moteurs-compresseurs à pistons moteurs (57) parallèles reliés entre eux par une bielle courbe (58) guidée par des rouleaux (59) et actionnant, au moyen d'un levier (60), une roue - (62) à secteur denté ainsi que deux pistons de compression (61) simples ou multiples dont les chambres de compression peutvent être alimentées par les gaz brûlés dans les chambres de combustion des pistons (57), les ensembles moteurs-compresseurs étant reliés entre eux au moyen des roues (62) à secteur denté ou au moyen d'ensembles embiellage (63) -chaîne (64 - arbre moteur (65), ou d'engrenages coniques.

15. Dispositif, suivant l'une quelconque des revendications 1 et 2, caractérisé en ce que les pistons moteurs (1") peuvent être opposés dans une même chambre de combustion ou être montés dans deux chambres différentes et sont reliés aux pistons compresseurs (5", 6") au moyen d'une équerre (66), dont l'angle (67) est monté à pivotement, et dont les bras sont rigidifiés au moyen d'une tige torique (68) guidée à coulissement par des roulettes (69), ou analogues, les chambres de compression étant munies de soupapes de décharge commandées, et les pistons étant synchronisés au moyen d'engrenages (70).

16. Dispositif, suivant la revendication 1, caractérisé en ce qu'il est un compresseur autopropulseur constitué par des cylindres parallèles (71) dans lesquels sont guidés des pistons compresseurs (72) simples ou multiples, qui sont actionnés chacun par une ensemble bielle (73) -manivelle - (74) tournant en sens contraire de l'autre, dont la manivelle (74) est montée, avec possibilité de verrouillage intermittent au moyen d'un frein (75) commandé automatiquement par un programmateur ou un microprocesseur, sur un disque d'entraînement (76).

17. Machine d'usinage des cylindres toriques, caractérisée en ce qu'elle est munie d'un outil à tranchants multiples entraîné en rotation par un flexible guidé dans un tube torique ou par un moteur présentant un carter torique, le tube ou le moteur étant monté sur un bras pivotant, et par un polissoir extensible monté également sur un tube torique solidaire d'un bras pivotant.

Revendications modifiées conformément à la règle 86(2) CBE.

1. Dispositif moteur et/ou compresseur caractérisé en ce que séparément ou en association ils peuvent appliquer une force à un véhicule sans perte de masse, ce en utilisant l'action de la pression d'un gaz, de ressorts d'une déflagration, ou d'une détonation ayant lieu dans les cylindres de moteurs et/ou compresseurs de forme droite ou ronde, moteurs à combustion interne ou à vapeur, ce graçe à des dispositifs qui permettent à la réaction de prendre des chemins courbes ou parraléles, qui neutralisent la réaction, ou par l'adjonction de soupapes de décharge placée prés de la culasse, et ouvertes au point mort haut et qui ont pour effet d'annuler la réaction, en ce que la machine préconisée pour usiner les tores rend possible la réalisation de moteurs toriques,ces moteurs à pistons droits ou toriques munis d'embiellages peuvent en plus de l'action propulsive utiliser la réaction pour mouvoir des roues ou des hélices , les moteurs toriques des figures 6 et7 ne sont pas autopropulseurs , mais certains de leurs organes sont identiques, rouleaux(59) guidant les bielles toriques(58) pistons munis de rouleaux,embiellages déportés, les pistons auront moins de frottement que ceux du moteur classique , ils ne sont pas tirés et poussés de travers.

2. Dispositif, suivant la revendication 1, caractérisé en ce qu'un dispositif moteur-compresseur autopropulseur muni ou non de soupapes de décharge comporte d'une part , deux pistons moteurs droits (1) disposés dans un cylindre commun (1') et actionnant chacun , au moyen d'un ensemble vilbrequin (2,3) et d'une bielle (4) au moins un piston compresseur droit(5) , ou plusieurs pistons compresseurs (5,6) alignés entre eux dans des chambres de compression , ou de combustion , ces chambres de combustion pouvant également fonctionner en Diésel , et, d'autre part , des organes de syncronisation des mouvement des pistons sous forme d'engrenages (8) reliés à des engrenages inverseurs (10) au moyen de chaines-(9) et chacun à une roue dentée solidaire de l'axe des vilbrequins (2,3) ou d'engrenages coniques et d'arbres , en ce que la sortie d'échappement du cylindre commun (1') est relié à réservoir intermédiaire (12) alimentant les chambres de compression , et en ce que les axes (11) des engrenages inverseurs (10) forment des arbres moteurs .

3. Dispositif , suivant l'une quelconque des revendications 1 et 2,caractérisé en ce que les pistons 1 et 5 ayant la compression du Diésel sont avantageusement doté d'une avance à l'injection comprise entre 40° et 50°,de préférence 45°.

4. Dispositif , suivant l'une qelconque des rendications, caractérisé en ce que les cylindres compresseurs ou évoluent les pistons (5,6) sont avantageusement munis de bouchons d'accés pour le nettoyage , et munis d'une bougie de chauffe , d'un injecteur , et qu'ils peuvent fonctionner soit en compresseurs, ou en moteurs propulseurs , si le systéme de liaison employé , pistons 1 et 5 courbe la réaction , ce qui évite l'emploi de soupapes de décharge .

5. Dispositif suivant la revendication 1, caractériséen ce qu'il consiste en deux cylindres moteurs (13) toriques dans lesquels sont montés des pistons toriques (14) reliés à des pistons compresseurs et/ou moteurs (15) uniques ou multiples , au moyen de tiges coudées (16) guidées par des rouleaux(17 les pistons (14) étant accouplés et synchronisés au moyen de portions d'engrenages-(18) engrénant entre eux et reliés chacun , d'une part, au moyen d'un levier (19) à la tige coudée -

(16) correspondante , et, d'autre part, au moyen d'une bielle (20) et d'une biellette (21) à un vilbrequin (22) solidaire d'un volant (23) , et en ce que les cylindres compresseurs peuvent être alimentés par les gaz provenantdes cylindres (1') , et qu'ils peuvent également fonctionner en moteurs .

6. Dispositif suivant l'une quelconque des revendications 1à5, caractérisé en ce que les pistons moteurs (1 ,14) s'étendent perpendiculairement aux pistons compresseurset/ou moteurs (5, 6, 15) .

7. Dispositif , suivant la revendication 1, caractérisé en ce qu'il est un dispositif autopropulseur uniquement compresseur constitué par des cylindres paralléles (24) dans lesquels sont guidés des pistons uniques ou multiples (25) entrainés par l'intermédiaire d'embiellages connus éventuellement reliés entre eux par des engrenages , au moyen d'un ou de plusieurs moteurs électriques alimentés par des cellules photovoltaïques, ou par une autre énergie solaire ou atomique , et par des soupapes commandées (26) communiquant avec la partie supérieure des cylindres (24) , ces soupapes (26) étant commandées à l'ouverture au point mort haut .

8. Dispositif suivant la revendication 1, caractérisé en ce qu'il est uniquement moteur , et est constitué par des pistons toriques (28) guidés en mouvement alternatif dans des chambres (29) et reliés entre eux par une tige torique (30) du coté de son palier il est muni d'unsecteur denté (32)qui peut éventuellement permettre l'accouplement avec un dispositif identique, un balancier(31) est relié à la tige torique et il est relié à un embiellage (34) par l'intermédiaire d'une biellette (33).

9. Dispositif suivant l'une quelconque des revendications , caractérisé ence que les bielles courbes , et les pistons toriques sont guidés et maintenus par des galets , ou d'aiguilles de guidage périphériques et que les pistons sont réalisés en plusieures parties assemblées entre elles , ce pour permettre le montage des galets .

10 . Dispositif non propulseur des planches 6et7 suivant la revendication 1, caractérisé ence qu'il est muni de quatre pistons toriques , (36,40)-reliés entre eux par des bielles toriques guidées ansi que les pistons par des rouleaux ( , qu'il est muni d'embiellages classique, qui peuvent être déportés (42,43) , qui entrainent par l'intermédiaire d'engrenages coniques (44) un axe commun (45) actionnant un arbre moteur (46) .

11. Dispositif suivant la revendication 1, caractérisé en ce qu'il est muni d'une paire de pistons toriques libres (47) montés chacun à l'extrémité d'une bielle toriquede guidage(48 , dont la face opposée à la bielle travaille en moteur dans une chambre de combustion , et dont la face solidaire de la bielle (48) travaille en compresseur, la chambre de compression étant alimentée en gaz brulés issus de la chambre de combustion, les pressions dans les chambres étant controlées et gérées par un microprocesseur informé par des détecteurs de la pression qui régne dans les chambres , et qui commanderont les injecteurs, les soupapes grace à des commandes pneumatiques, hydrauliques , ou électromagnétiques .

12. Dispositif suivant la revendication 1, caractérisé en ce qu'il est un moteur à pistons toriques àeffet explosif sur les deux faces de ses deux pistons (49) qui sont reliés chacun par une bielle torique (50) guidée par des galets,et d'autre part à l'autre extrémité de cette bielle une masse(51) est fixée, qui est d'un poids égal ou supérieur à celui du piston ,chaque masse étant solidaire d'un balancier qui actionne par l'intermédiaire d'une bielle un systéme bielle-manivelle solidiare du deuxiéme systéme à l'aide de chaines(53) ou d'arbres et d'engrenages coniques , d'engrenages inverseur - (54) qui actionnent des arbres moteurs capables d'actionner des pales d('hélicoptére) , et les cames commandant les systémes hydrauliques qui actionnent les soupapes , l'allumage,ou les injecteurs , en ce que ce moteur à vocation spatiale peut également fonctionnerà l'aide de vapeur produite par l'atome .

13.Dispositif suivantla revendication 1, caractérisé en ce qu'il est constitué par au moins deux ensembles moteurs-compresseurs à pistons droits et paralléles reliés entre eux par une bielle courbe (58) et qui est guidée par des rouleaux, - (59), et actionnant au moyen d'un levier (60) une roue (62) à secteur denté ainsi que deux pistons ou plus de compression(61), dont les chambres de compression peuvent être alimentés par les gaz brulés dans les chambres de combustion des pistons(57) les ensembles moteurs compresseurs pouvant être reliés entre eux au moyen des roues - (62) à secteur denté , ou au moyen d'ensembles embiellage (63)-chaines(64-arbre moteur (65)ou d'engrenages coniques et d'arbres ,et en ce que l'embiellage est déporté sur un coté du moteur .

14. Dispositif suivant l'une quelconque des revendications 1 et 2 , caractérisé en ce que les pistons moteurs (1) peuvent êtreopposés dans une

méme chambre de combustion , ou être montés dans deux chambres différentes , ils sont reliés aux pistons compresseurs (5,6) au moyen d'équérres - (66) dont l'angle (67) est monté à pivotement , et dont les bras sont rigidifiés au moyen d'un tige torique (68) guidée à coulissement par des roulettes (69) , en ce que si chaque piston a sa propre chambre de combustion ils seront reliés aux pistons compresseurs (5) par des vilbrequins , chaque piston actionnant un vilbrequin solidaire d'undeuxiéme vilbrequin , sur les arbres desquels sont fixés les engrenages synchronisateurs (70) , sur ces deuxiémes vilbrequins sont fixés les équerres - (66) et les pistons compresseurs (5) sont actionnéspar ces équérres (66) , les chambres de compression pouvant être alimentées par les gaz brulés provenant des chambres de combustion , et ence que ces moteurs peuvent être munis de soupapes de décharge , si une réaction antipropulsive se manifeste sur le pivot (67) , dans le cas contraire les chambres de compression peuvent pour une fonctionner en Diésel , et d'autres en compresseurs .

15. Dispositif, suivant la revendication 1, caractérisé en ce qu'il est un compresseur autopropulseur constitué par des cylindres paralléles (71) dans lesquels sont guidés des pistons compresseurs (72)simples ou multiples qui sont actionnés par un ensemble bielle (73)-manivelle(74) tournant en sens contraire de l'autre , dont la manivelle (74) est montée avec possibilitéde verrouillage intermitent au moyen d'un frein (75) commandé automatiquement par un programmateur , ou un microprocesseur.

16. Machine d'usinage des cylindres toriques , suivant la revendication 1, caractérisée en ce que l'usinage intérieur des cylindres toriques est réalisé à l'aide d'un outil à tranchants multiples, guidé dans le tore par un balancier muni d'un bras torique, entrainé en rotation par un flexible passant au milieu du bras torique, ou par un petit moteur présentant un carter torique , l'outil tranchant pouvant être remplacé par un polissoir extensible .

Fig.1

Fig. 2

Fig.3

Fig.4

# Fig. 5

Fig. 6

36

39

36

36

37

38

40

Fig.7

Fig.8

# Fig.9

Fig.10

Fig. 11

57 57 57

61 61

62

59 59

60

58

63

64

65

0 216 976

Fig.12

0 216 976

# Fig.13

Fig_14

Office européen
des brevets

# RAPPORT DE RECHERCHE EUROPEENNE

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| E | FR-A-2 565 626  (CANOT)<br><br>* Pages 1 et 2 en entier *<br><br>--- | 1,2,5,<br>7-13,<br>15-17 | F 01 C    9/00<br>F 04 B   35/00 |
| A | FR-A-1 233 018  (DUGELAY)<br>* Figure 1; page 1 en entier *<br><br>--- | 1,6 | |
| A | FR-A-2 349 733  (DURACHER)<br>* Page 4, lignes 1-16 *<br><br>----- | 3 | |

| | | | DOMAINES TECHNIQUES RECHERCHES (Int. Cl.4) |
|---|---|---|---|
| | | | F 01 C<br>F 04 B<br>F 02 B |

Le présent rapport de recherche a été établi pour toutes les revendications

| Lieu de la recherche | Date d achevement de la recherche | Examinateur |
|---|---|---|
| LA HAYE | 02-05-1986 | WASSENAAR G. |

OEB Form 1503 03 82

CATEGORIE DES DOCUMENTS CITES

X : particulièrement pertinent à lui seul
Y : particulièrement pertinent en combinaison avec un autre document de la même categorie
A : arrière-plan technologique
O : divulgation non-ecrite
P : document intercalaire

T : theorie ou principe à la base de l'invention
E : document de brevet antérieur, mais publie à la date de dépôt ou apres cette date
D : cité dans la demande
L : cité pour d'autres raisons

& : membre de la même famille, document correspondant